(19) Europäisches Patentamt
European Patent Office
Office européen des brevets

(11) **EP 2 551 798 A1**

(12) **EUROPEAN PATENT APPLICATION**

(43) Date of publication:
**30.01.2013 Bulletin 2013/05**

(51) Int Cl.:
**G06N 3/04** *(2006.01)*   **G06N 3/08** *(2006.01)*

(21) Application number: **11382260.5**

(22) Date of filing: **28.07.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Fundació CTM Centre Tecnològic**
**08242 Manresa (ES)**

(72) Inventors:
• **Cusidó Roura, Jordi**
**08242 Manresa (ES)**

• **Delgado Prieto, Miguel**
**08242 Manresa (ES)**
• **Ortega Redondo, Juan Antonio**
**08242 Manresa (ES)**
• **Garcia Espinosa, Antoni**
**08242 Manresa (ES)**

(74) Representative: **Ponti Sales, Adelaida**
**Oficina Ponti**
**C. Consell de Cent, 322**
**08007 Barcelona (ES)**

(54) **Genetic algorithm-based training of an ANFIS for electric energy consumption forecasting**

(57)    The method for predicting electric consumptions is characterized in that it comprises the following steps:
- selecting input data;
- pre-processing the data;
- configuring the settings of an ANFIS, from an input data selection, the number of membership functions, the type of input membership functions and/or the type of output membership functions;
- training of the ANFIS; and
- evaluation of the ANFIS.
     Preferably, the ANFIS is an adaptative network based on a Takagi-Sugeno fuzzy system.

# Fig. 4

Step 1: Data selection (outlier detection)

Step 2: Data pre-processing (scaling, filters, etc)

Step 3: ANFIS configuration → - Input selection / - Number of mf / - type of input mf / - type of output mf

Step 4: ANFIS Training

Step 5: ANFIS evaluation : ERMS < ERMS ref.? — NO

YES

END

Printed by Jouve, 75001 PARIS (FR)

**Description**

The present invention refers to a method for predicting electric consumptions in industrial productive installations. The prediction is done applying modeling strategies based on auto-configurable ANFIS structures by genetic algorithms (AG). This permits the modeling system to create models in a non-supervised way, with no need of a stepped design by a human expert, and reducing drastically the modeling times of a particular energy consumption point in an industrial plant.

In the industrial sector, Energy Management Systems (EMSs) have focused so far on the monitoring and off-line management of energy, as outlined in (Sheppard & Tisot, 2006).

A typical EMS is based on the collection of information through energy meters (electricity, gas, water, etc.), which is taken by a SCADA system or another software for later information management, such as collect the data, store and presented them appropriately for the users. The software is also able to analyze data and generate reports to identify critical points of consumption.

The main advantage in these monitoring systems is to enable the user to manage consumption and costs through energy audits that are supported by data collected continuously, improving the energy efficiency of the plant, its processes and devices.

In addition, these energy data could be used to build up different kinds of models to get consumption trends. So in some recent works models based on linear regressions of energy consumption versus production scheduling are proposed (Van Gorp, 2004). These models could be used to forecast energy consumption for a given production volume, which has a number of useful applications, ranging from consumption energy prediction for production scheduling to predicting the possible energy saving if some proposed energy efficiency measures are taken (Swords, Coyle, & Norton, 2008).

However, the models used are based on simple linear regressions, the mechanisms of control are normally off-line actions, and not to use advanced analytical tools for prediction and control. Improving of these items could enhance the system performance and make more automatic the EMS without affect the production or comfort.

Our proposal is an intelligent EMS (IEMS). As a typical EMS, it can access to information collected from the meters via field buses. Furthermore, it also has capacity to interact with active systems in the building or factory plant to take automatic actions with the objective of optimising the demanded power.

The IEMS can take advantage of its ability to create advanced models of load profiles of consumptions from collected information (energy database) and information entered by users to generate consumption models and consumption forecasting. Based on these models the IEMS will schedule the power load demand in order to reduce for instance power peaks, contracted power, support the making decision in production manage (i.e. scheduling workdays, on-off production lines, shift power loads to avoid load peaks, etc.), to optimise and improve economical, environmental and electrical key performance indicators, etc.

Taking into account the previous precedents an ANFIS has been selected as base algorithm of the modelling system because of its potential to solve problems of time series modelling. Indeed, the availability of historical load data on the EMS databases and the fact that ANFIS are data driven approaches capable of performing a non-linear mapping between sets of input and output variables make this modelling tool very attractive. However, ANFIS are so flexible models that the task of designing an ANFIS for a particular application is far from easy. There are parameters that need to be configured previously to the training process. Thus, taking advantages of useful capabilities of Evolutive Algorithms to look for near-optimal solutions, a genetic algorithm was developed and tested for automatic configuration. This means the automatic selection of input variables, number of membership functions for each input, type of membership functions and type of output membership function.

As a result, a new system modelling able to face to problem of modelling of complex industrial process is proposed. It must be highlighted its level of autonomy, capacity of generalization, automatic tuning of parameters by means of evolutive algorithms, the selection of the most important input variables, the derivation of an uncertainty interval on the model output and the possibility to perform a comparison of different models and, therefore, select the optimal model.

As it was mentioned previously, one of the most important parts of the IEMS is the system modeling. It could be said that this is at the heart of the system. To get a system modeling with high capabilities of autonomy and self learning.

Typical algorithms for modelling ask for human supervision in each step of the design, but the proposed algorithm is aimed to be carried out with the less possible human intervention. So, one of the innovative objective of this work is to build up methods in each step that enable the system to pass through them automatically achieving the expected results. Description of the steps is presented following.

Step 1: The first step is the data selection. Here the data is statistically analysed with the aim of removing outlier data and finding relationships between the output and inputs by means of statistical parameter as standard deviation, variance and statistical techniques as PCA, linear regressions, etc. Among these, outlier detection based on statistical parameters is used, as it is explained further.

Step 2: The second step is the data pre-processing, where the data is scaling if it is needed, filtered or converted by means of some mathematical transformation. All these operations are done with the aim of improving or enhancing the existing relationships between the output and input data.

Step 3: Next, in the step called "ANFIS configuration" or "ANFIS self-tuning", different kind of ANFIS settings must be configured. For example, the final input data, the number of membership functions and the type of membership functions of the inputs and the output. To carry out this step different kinds of methodologies could be implemented. For example, a static solution could be to analyze the load profile for a given site, get the particular configuration parameters and leave the static results for this model. Instead, in this work was sought an algorithm that in an adaptative and no supervised way gets the optimal or near optimal configuration, independently of the load profile to be modelled. In other words, a multi sites system modelling. Evolutive algorithms, as Genetic Algorithms (GA) are a good choice for this kind of problems. Thus, the multi objective GA (MOGA) was selected to carry out this step.

Step 4: Then, the training is carried out. Here it is important to select properly the training and the checking data, the training algorithm and the stop criterion that in this case was the number of iterations. The theory of ANFIS has a wide variety of training algorithms. The hybrid algorithms, which is a mix between least square (LS) and back-propagation (BP) algorithms was used.

Step 5: Finally, with the checking data selected in the previous step, the obtained ANFIS model is checked. Typically, the way to quantify the fitness of the model is through the root mean squared error (RMSE) calculation. The equation (1) shows the mathematical formula. $N$ is the number of samples, $d_i$ is the desired output and $o_i$ is the output of the model.

$$\text{RMSE} = \sqrt{\frac{1}{N}\sum_{i=1}^{N}(d_i - o_i)^2} \qquad (1)$$

Since the aim is to get an unsupervised system modelling with continuous and adaptative learning capabilities, the RMSE of the new model is compared with the RMSE of the reference model. The RMSE of previous model could be used as reference, so if the new model RMSE is better that the old model RMSE, the new model replaces the old one. If not, the cycle starts again and the old model will be used.

For a better understanding of the description, some drawings are attached, in which:

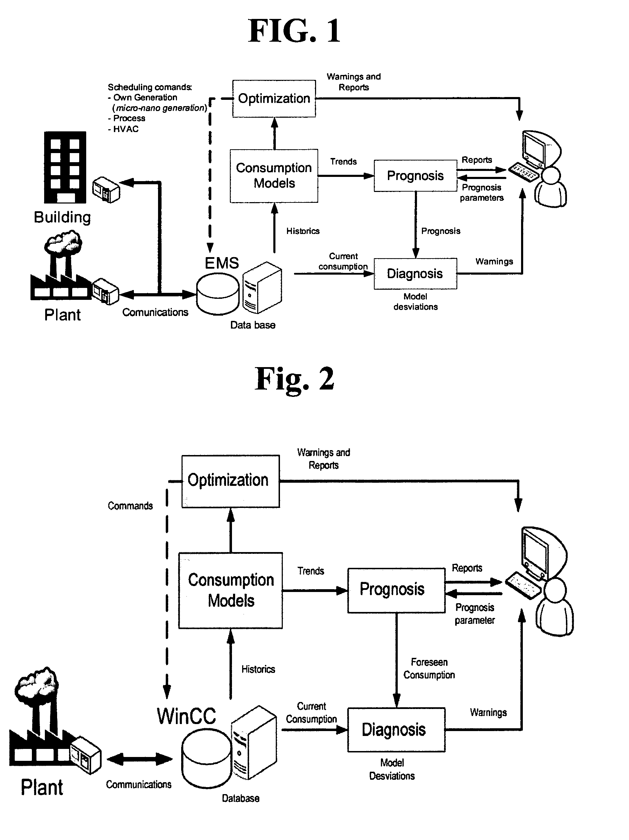

Fig. 1 is a block diagram of the method of the present invention applied in a plant and a building;
Fig. 2 is a block diagram of the method of the present invention applied in a plant;
Fig. 3 is a block diagram of the method of the present invention applied in a generation system;
Fig. 4 is a dataflow showing the steps of the method of the present invention;
Fig. 5 is the basic ANFIS architecture with two inputs, four if-then rules and one output;
Fig. 6 are graphics showing typical membership functions for fuzzy sets;
Fig. 7 is flowchart of a GA;
Fig. 8 is a graphic showing a multi-objective optimisation;
Fig. 9 is the codification of the MOGA chromosome used for the ANFIS self-tuning;
Fig. 10 is a general modelling system implemented for the proposed IEMS;
Fig. 11 is a process for training and configuring the ANFIS by AG;
Fig. 12 is a quarter hour load profile of selected workshop (OS1);
Fig. 13 is an ANFIS model validation of overall energy consumption of the section OS 1;
Fig. 14 is an ANFIS model validation of energy consumption of a press machine PM1;
Fig. 15 is an ANFIS model validation of energy consumption of a press machine PM2;
Fig. 16 is an ANFIS model validation of energy consumption of a press machine PM3;

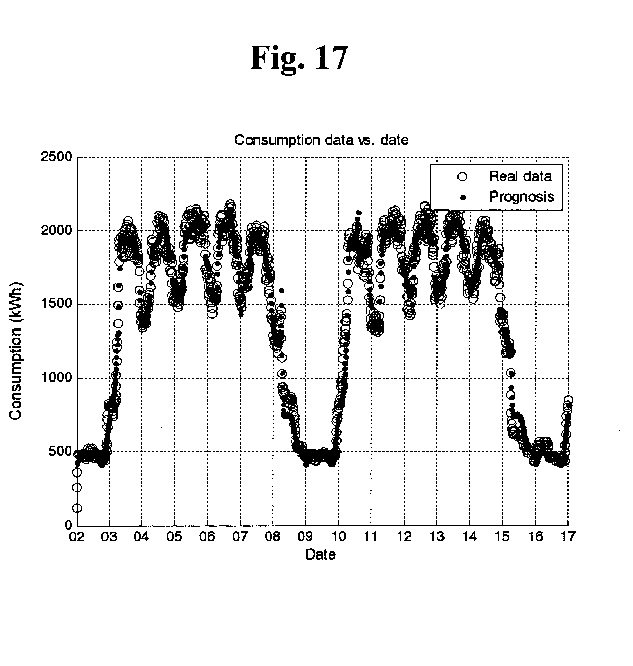

Fig. 17 is an ANFIS model validation of energy consumption of other section;

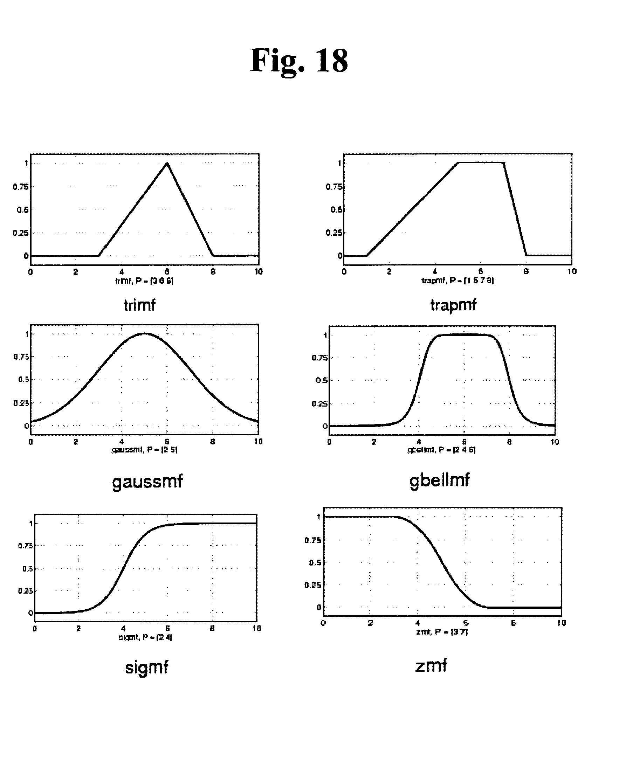

Fig. 18 are membership functions typical in diffused systems; and

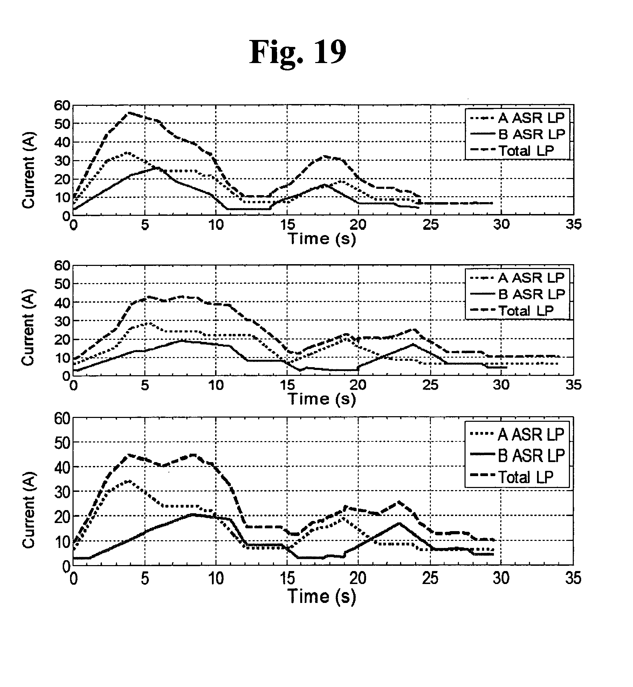

Fig. 19 are graphs showing the results of the industrial plant.

Design of the Algorithms

The objective of this work is to get a system modelling with high capabilities of automatic modelling and continuous and adaptative learning from collected energy data by the EMS. Therefore, the system has to be able to self-tuning of parameters, selection of the most important input variables, derivation of an uncertainty interval on the model output and the possibility to perform a comparison of different models and, as a result, selection of the optimal model.

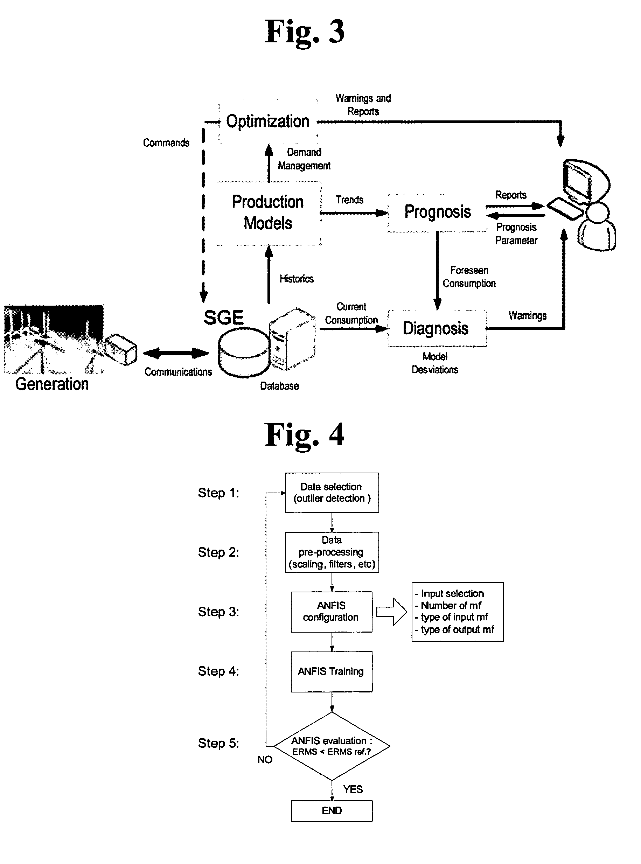

For that reason, it is necessary to design and implement an appropriated algorithm in each step showed in Fig. 4.

Step 1: Data selection and statistical analysis

Collected from the sensors system we have the raw data of production, temperature, time data, work shift data, and energy data. The first step is to apply a statistical analysis to identify and remove the outlier data. This process is one of the most important to get successful in the automatic modelling because outlier data introduce "noise" in the final model. In this case, for the system modelling, the criteria to identify and remove outlier data were to remove energy consumption data equal or less to cero. Usually both in operation and in no-operation days there are energy consumptions, so the zero or negative consumption data was taken as outlier. Furthermore, those data that were three times bigger than standard deviation were removed as it is showed in the equation (2), where $\sigma$ is the standard deviation of energy consumption data. These criteria were chosen from visual analysis of the load profiles obtained from energy database.

$$outlierData > 3 \cdot \sigma \qquad (2)$$

Moreover, in this part of the process a pre-input selection can be done. For example, statistical analysis to find the main inputs that affecting the output and reduces high-dimensional data sets to a small number of modes or structures can be performed. One of these kinds of analysis applied was the principal component analysis (PCA) (Daffertshofer, Lamoth, Meijer, & Beek, 2004), which can be used to determine the degree of dependence between the output and each input. One of the problem to use this methodology is that it is though for linear regressions mainly and the modelling energy consumption problem is not. For that reason, an exhaustive ANFIS searching was implemented instead.

Step 2: Data pre-processing

Here the scaling and transformation process are done. Due to the randomness of the press machines, a moving window filter was applied to the energy consumption data. This filter reduces the high variation of the load profile. In the equation (3) the mathematical expression of the filter can be seen. $y(n)$ represents the filtered energy data, $x(n)$, $x(n-1)$, $x(n-2)$ and $x(n-3)$ represent the current and delayed data one, two and three quarters of an hour before respectively.

$$y(n) = \frac{1}{4}x(n) + \frac{1}{4}x(n-1) + \frac{1}{4}x(n-2) + \frac{1}{4}x(n-3) \qquad (3)$$

Other data transformations are done in this step. For example, getting the day-of-the week (called week day in this work) from the date recorded in the database. Also, data scaling could be considered. In this work different kinds of scaling were tested without considerable improvements, so the raw data were used. Using the raw data avoid scaling calculations and make the analysis of results more direct.

Step 3: ANFIS configuration

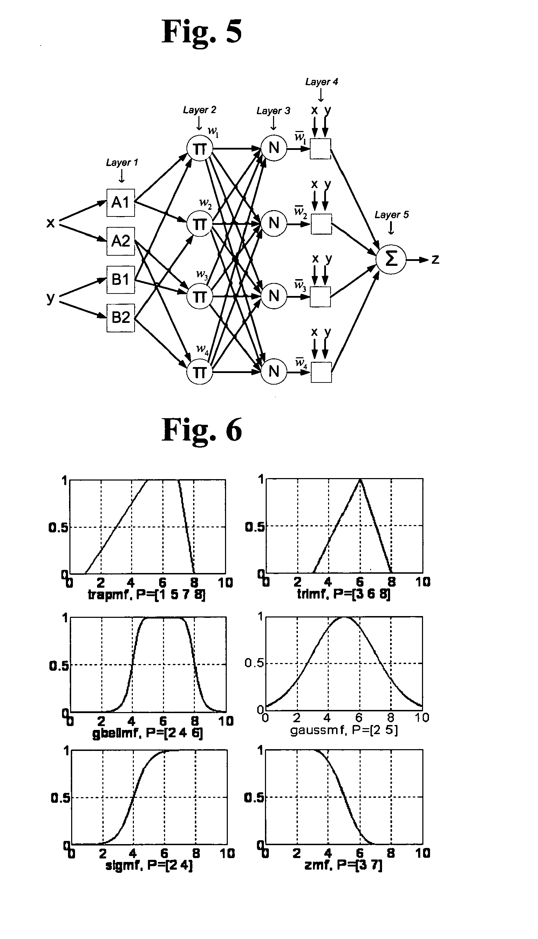

An ANFIS is an Adaptative network based on Takagi-Sugeno fuzzy system. A fuzzy system is made up of input and output variables, membership functions, fuzzy rules and an inference method. In this case, the inputs are the energy drivers, which are thought to affect the consumption profile like daily production, outdoor temperature, day of the week, etc. The membership functions are the functions that define the fuzzy sets and they are used to calculate the degree of membership for a determinate value of its inputs. For example, to determinate the degree of how high or low the production is. The fuzzy rules are if-then rules that define how the output must be for a specific value of membership of its inputs. Thus, by means of the inference method, the output values are obtained when the input values are known. In general, the fuzzy systems have different kind of inference methods. However the ANFIS is based on a particular kind of fuzzy system with Takagi-Sugeno rules as inference method. Fig. 5 shows ANFIS architecture of two inputs, four if-then rules and one output. x and y are the selected energy drivers that could be, for example, scheduled production and forecasted temperature.

Structure

Fig. 5 shows clearly the architecture of an ANFIS with two inputs, four rules and an output. This structure has a maximum the four rules and they are depicted in the equation (4)

$$\text{if } x \in A_1 \wedge y \in B_1 \implies z_1 = p_1 x + q_1 y + r_1$$
$$\text{if } x \in A_1 \wedge y \in B_2 \implies z_2 = p_2 x + q_2 y + r_2$$
$$\text{if } x \in A_2 \wedge y \in B_1 \implies z_3 = p_3 x + q_3 y + r_3$$
$$\text{if } x \in A_2 \wedge y \in B_2 \implies z_4 = p_4 x + q_4 y + r_4$$

$$(4)$$

A linguistic interpretation of the rules applied to energy modelling problem could be:

$$\text{if production } (x) \text{ is low}(A_1) \text{ \& time } (y) \text{ is morning } (B_1)$$
$$\implies \text{consumption}_1 = p_1 x + q_1 y + r_1$$
$$\text{if production } (x) \text{ is low}(A_1) \text{ \& time } (y) \text{ is night } (B_2)$$
$$\implies \text{consumption}_2 = p_2 x + q_2 y + r_2$$
$$\text{if production } (x) \text{ is high } (A_2) \text{ \& time } (y) \text{ is morning } (B_1)$$
$$\implies \text{consumption}_3 = p_3 x + q_3 y + r_3$$
$$\text{if production } (x) \text{ is high } (A_2) \text{ \& time } (y) \text{ is night } (B_2)$$
$$\implies \text{consumption}_4 = p_4 x + q_4 y + r_4$$

The first part in (4) belongs to antecedents and the second part to consequents. The ANFIS structure executes these rules and calculates the output through five layers (Fig. 5). In the layer 1, the membership values (or compatibility measures) are calculated by means of the membership functions that are identified by $\mu_{A_i}(x)$ and $\mu_{B_i}(y)$, i=1, 2. This step is called fuzzification.

In the second layer, the weight of each rule has to be calculated by means of a fuzzy AND operation. The equation (5) shows how this is done. $\omega_j$ is the weight that belongs to the rule jth. This is the output of the layer 2 in Fig. 5.

$$\omega_j = \mu_{A_i}(x) \cdot \mu_{B_k}(y), \quad j = 1, 2, 3, 4. \ i = 1, 2. \ k = 1, 2. \qquad (5)$$

Next, in the layer 3, the strength, $\overline{\omega}_j$, is calculated. It is the ratio of the jth weight to the sum of the all weight. (6) shows the correspondent equation.

$$\overline{\omega}_j = \frac{\omega_j}{\sum_{i=1}^{N} \omega_i}, \quad N = 4 \qquad (6)$$

In the layer 4, $\overline{\omega}_j$ multiplies the correspondent output function (linear equations of the consequent part in (4), $z_j$). This is:

$$z_j \cdot \overline{\omega}_j = \overline{\omega}_j \cdot \left( p_j x + q_j y + r_j \right) \qquad (7)$$

Finally, in the layer 5, the overall output is obtained, which is the sum of the former outputs, i.e.

$$z = \sum_j z_j \cdot \overline{\omega}_j \qquad (8)$$

Training algorithms

The parameters to be tuned in an ANFIS are the membership function parameters of each input, which are called antecedents. Theses depend on the kind of selected membership function. The second parameters to find in the training process are the coefficients of the output polynomials (layer 4 in Fig. 5, right side in (4)). The number of rules (r), which are the other tuneable parameter in an ANFIS, are define in function of the number of inputs (*n*) and number of membership functions by input (*m*) and they range all the possible rules (9). So, this parameter does not change in the training process.

$$r = m^n \qquad (9)$$

The most common training algorithm is a hybrid algorithm. The antecedent and consequent parameters are obtained from historic data by means of back propagation (BP) and least squares (LS) algorithms, respectively. This algorithm is carried out in two steps in each epoch. First, a forward pass and second, a backward pass. Once all the parameters are initialised, in the forward pass, with the antecedent parameters fixed, input data and functional signals go forward to calculate each layer node output and the LS algorithm is used to calculate the consequent parameters. After identifying consequent parameters, the functional signals keep going forward until the error measure is calculated. In the backward pass, the error rates propagate from the output end toward the input end, and the parameters in antecedent part are updated by the BP method. The function to be minimized in both steps is showed in (1) and here is remembered:

$$RMSE = \sqrt{\frac{1}{N} \sum_{i=1}^{N} (d_i - o_i)^2}$$

$$(1)$$

Where $d_i$ is the desired output and $o_i$ is the ANFIS output for the ith sample from training data. N is the number of training samples.

ANFIS configuration

In the training process, the ANFIS internal parameters (antecedent and consequent parameters) are setting up. However, there are other external parameters, which have to be configured previously. These are the input selection, the number of membership functions for each input, the type of the membership function and the type of function of the output (the last one could be a linear equation or a constant function). A summary of all ANFIS parameters and methods for both training and configuration are showed in Table 1.

Table 1. ANFIS training, configuration parameters and methods.

| ANFIS Parameter | Method | Forward Pass | Backward Pass |
|---|---|---|---|
| Input selection | Human knowledge / | - | - |
| | MOGA[a] | | |
| Number of MF[b] by input | Human knowledge / MOGA[a] | - | - |
| Type of MF[b] | Human knowledge / MOGA[a] | - | - |
| MF[b] parameter (antecedent part) | Human knowledge / BP algorithm | Fixed | Gradient Descent |
| Rules | Human knowledge / BP-LS algorithm | LS Estimate | Gradient Descent |
| Coefficients (consequent part) | LS algorithm | LS Estimate | Fixed |
| [a] MOGA is the acronym of Multi Objective Genetic Algorithm. [b] MF is the acronym of membership function. | | | |

In the first step, some pre-input selection methodologies were proposed (PCA and exhaustive ANFIS searching). In the current step, these pre-selected inputs could be used as starting point for the final input selection. This will depend on the final selection algorithm.

Once the inputs are selected, the next step is to choose the number of the membership functions (MF) for each of them. In other words, choose the number of fuzzy sets for each input. In this point, the human knowledge can be used, having into account as basic criterion that the simpler the model is, the more capacity of inference the system modelling will have.

For the case of the membership function selection, some of the more used are triangular, trapezoidal, Gaussian, Gaussian bell, sigmoid and 'Z' functions, among others. Fig. 6 shows the graphic representation of them.

As it can be seen, the number of external parameters and their possible combinations are considerably high. So, it is necessary some kind of algorithm or methodology to get the optimal or near-optimal configuration. This is a disadvantage and a drawback to deal with when these kind of heuristic algorithms as ANFIS are used.

In addition, sometimes when we are looking for a good configuration, the training error is reduced but the checking error is increased. Then, the search of an optimal solution has to be traded off in some way and a multi objective algorithm has to be used. Hence, it was decided to use a multi objective genetic algorithm (MOGA) to find a near-optimal configuration. A full description of the multi objective problem solutions and MOGA approach can be found in (Goldberg, 1989).

Genetic algorithm

GA consists on searching algorithms based on the mechanics of natural selection and natural genetics. They combine survival of the fittest among string structures (chromosomes) with a structured yet randomized information exchange to form a search algorithm with some of the innovative flair of human search. In every generation, a new set of artificial chromosomes (strings) is created using pieces of the fittest of the old; an occasional new part is tried for good measure; these new chromosomes are gotten means functions or operators that mainly emulate the evolutionary processes of selection, mating and mutation. While randomized, genetic algorithms are no simple random walk, they efficiently exploit historical information to speculate on new search points with expected improved performance. These algorithms are computationally simple yet powerful in their search for improvement. Furthermore, they are not fundamentally limited by restrictive assumptions about the search space (assumptions concerning continuity, existence of derivatives, unimodality, and other matters) Genetic Algorithms have been developed by John Holland, his colleagues, and his students at the University of Michigan.

Some important definitions in order to understand GA basis are:

Chromosome, string or individual: string coded to represent some underlying parameter set, which once it is decoded could solve the optimization problem. This code defines the search space.

Population: set of individuals which represent possible solutions to the optimization problems been solved.

Fitness function: it is the function that quantifies how good each individual in solving the optimization problem is. This is the objective function that the algorithm has to minimize.

Parents: they are the selected individuals from the current population. They are selected by means of the selection function.

Evolutive operators: these are the operators applied to the parents in order to get a new population. The basic evolutive operators are the mating or crossing and the mutation.

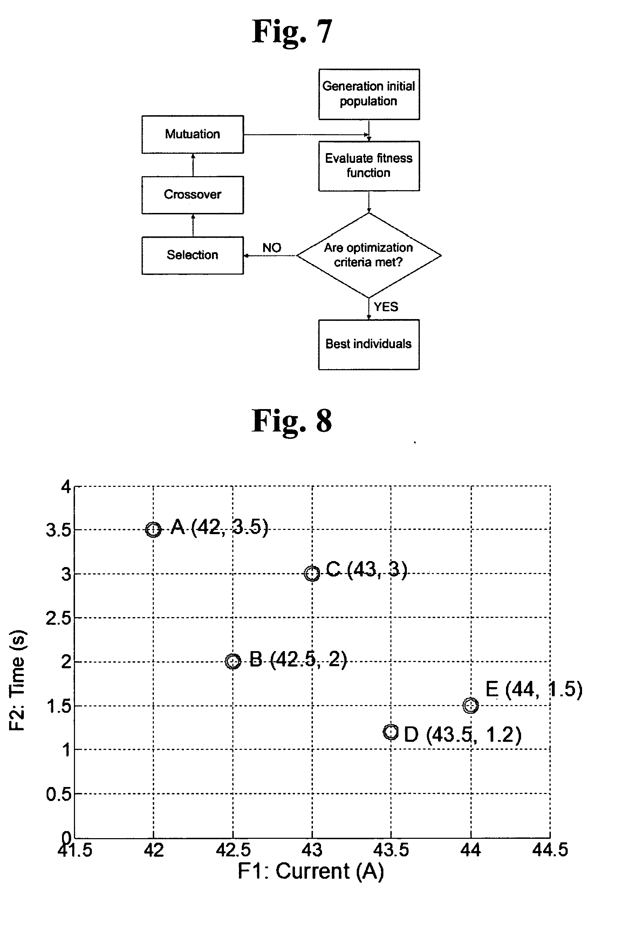

Fig. 7 shows the flowchart of a standard GA. Firstly, the initial population is obtained by means of random initialization process or it could be provided for the user, totally or partially, using information about where the solution could be lying in the search space. The number of individuals or chromosomes is an important parameter of the GA, one of which defines the diversity of the population. The diversity avoids not getting stuck in local minimum and ensures a broader exploration of the search space. Nevertheless, a very large population could make too slow the execution of the GA.

Once we have the initial population, calculation of the fitness functions is executed. This is the objective function, which has to be minimized. Every individual or chromosome is evaluated with the fitness function.

Then, the optimization criteria are evaluated. If they are met, the GA is stopped, if they are not, the evolutionary operators are used in order to get the next population or next generation.

The typical operators are the selection, crossover and mutation ones. As its name suggests the selection consists in to select the parents from current population. There are many ways to execute this operator, generally, the best individuals are selected as parents and some of them are directly put in the next generation. This number of direct children is another GA parameter and it determinates the degree of opportunity reproduction of the best individuals. This is named the selective pressure.

The crossover or mating is the process of crossing over the genetic material from the parents to create the genetic material of the children. The crossover can be done of different ways. For example, we can use the scattered function, which takes the genetic material from two parents and crosses over them following a generated random binary vector. Where the binary vector is 1 the gens are taken from parent 1 and in another case from parent 2. For example, if p1 and p2 are the parents.

$$p1 = [a\ b\ c\ d\ e\ f\ g\ h]$$

$$p2 = [1\ 2\ 3\ 4\ 5\ 6\ 7\ 8]$$

And the binary vector is [1 1 0 0 1 0 0 0], the function returns the following child:

$$child1 = [a\ b\ 3\ 4\ e\ 6\ 7\ 8]$$

Mutation operation applies random changes to individual parents to form children. Mutation provides genetic diversity and enables the genetic algorithm to search a broader space.

When the new population is obtained, the cycle is repeated until the optimization criteria are met.

Multi Objective Problem

Multi objective problem looks for the optimization of two or more fitness functions since it is normal that in optimization problem we want to minimize or maximize more than one variable. For example, we seek to decrease the training error but without affect the performance of the generalization of the modelling system, particularly the checking error. In order to get these objectives, here we propose a multi objective genetic algorithm (MOGA).

In the multi objective optimization, is normal that whereas a variable is being optimized the other one(s) is (are) being affected negatively. Then the search of an optimal solution has to be traded off in some way. So the concept of nondominated or noninferior variables and Pareto optimality appear.

Nondominated or noninferior variables are those solutions to the optimization problem that are not dominated or inferior to any other solutions according to the fitness functions. For example, in Fig. 8 it is showed the result of evaluating the fitness functions of five possible solutions for the optimization problem of ANFIS self-tuning. It could be observed that the best solutions are lower on the graphic and to the left. These are A, B and C. See that none of the three points is best along both dimensions. There are trade-offs from one of these three solutions to another.

For instance, the solution A reduces the checking error to 42, but increases the training error to 35. B reduces checking error to 42.5, 0.5 less than A, but introduces a training error of 20 only. Thus, these three points are nondominated because there are no points better than these. We can see that D and E are no good solutions and they are called dominated solutions. The set of the best solutions, in the example A, B and C, is called the Pareto optimal set.

In order to implement a MOGA algorithm, two main parts have to be defined: the chromosome or individual codification and the fitness functions that have to be minimized.

Chromosome coded for ANFIS self-tuning

In summary, the self-tuning algorithm has to define:

- Input variables (week day, time in minutes, maximum temperature and production by work shift)
- The number of membership functions or fuzzy sets for each input (minimum 2 and maximum 5)
- The type of membership function (triangular, trapezoidal, Gaussian, Gaussian bell, sigmoid and 'Z' functions)
- The type of the output function (linear or constant)

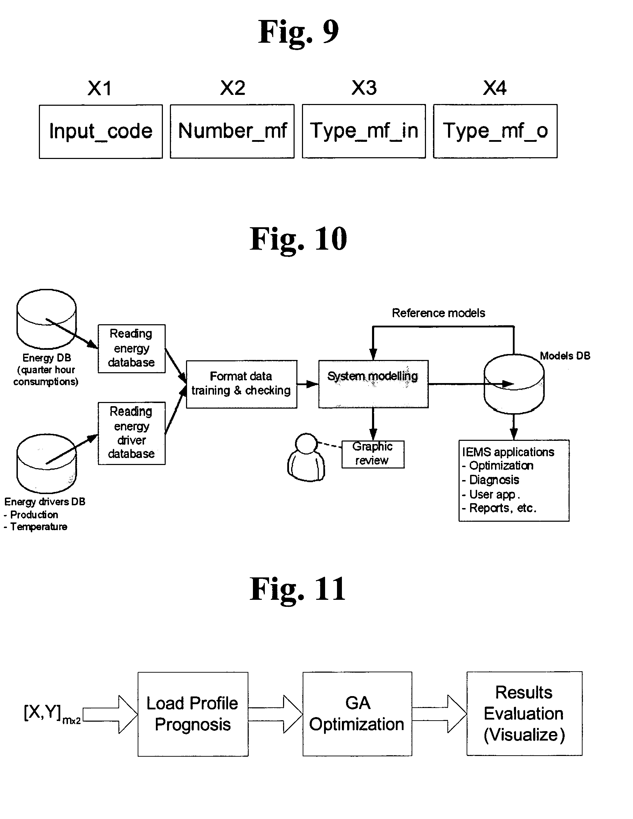

In this way, there are four external parameters to be configured before the final training is carried out. The final codification of the used chromosome for the MOGA algorithm is showed in Fig. 9.

Fitness function definition

Since we want to avoid the overtraining and this is done achieving acceptable RMSE error both for training and checking data, the two chosen fitness functions for the MOGA algorithm are those that calculate the RMSE following the equation (1). In (9) and (10) are presented the final fitness functions $f_1(x)$ and $f_2(x)$. There, N is the number of samples for training, di is the desired output and trn_outputi is the output for training data of the evaluated model. M is the number of samples for checking, di is the desired output and chk_outputi is the output for checking data of the evaluated model. The parameters of the evaluated model are defined by the chromosome x = [x1, x2, x3, x4] (see Fig. 9).

$$f_1(x) = RMSE_{trn} = \sqrt{\frac{1}{N}\sum_{i=1}^{N}(d_i - trn\_output_i)^2}$$

$$(9)$$

$$f_2(x) = RMSE_{chk} = \sqrt{\frac{1}{N}\sum_{i=1}^{M}(d_i - chk\_output_i)^2} \qquad (10)$$

Model validation

The validation of the model is carried out by means of the calculation of RMSE (1) for both training and checking data. The checking data is no used in the training process.

Old models for the same site are used as reference model to check the improving of the new models. If the new calculated model is better than the old one, the latter is replaced.

The system modelling presented in Fig. 4 is a subsystem of the final system modelling used in the real application. Fig. 10 shows the diagram block architecture of how this general system was implemented and where the subsystem modelling was located. As a result, the system modelling is able to build up automatically the models of different sites, getting the data from IEMS database.

In order to test the system modelling, the proposed consumption-forecasting framework was implemented in an independent section of an automotive factory. The section was selected for the high randomness or high variability of its main loads. These loads were the overall consumption of the particular section (OS1), where the sheet of the carcass is made, and three press machines (PM1, PM2 and PM3), whose sum is near to the 60 % of the overall consumption of the section. Therefore, four consumption models (PM1, PM2, PM3 and OS1 models) were obtained for this section. In addition, other section was modelled, which has less random behaviour and bigger power demand, and compared with the OS1 model.

The considered energy drivers (possible inputs) were the production (p) of the selected section, the external temperature (T), the type of day (w) (working day or holiday), the day of the week (d) (Monday to Sunday), the time (h) in minutes, the work shift (ws) and the delayed energy data (c_n) (i.e. the last nth previous consumption). A forecast for the next day is obtained, with a time resolution of 15 minutes.

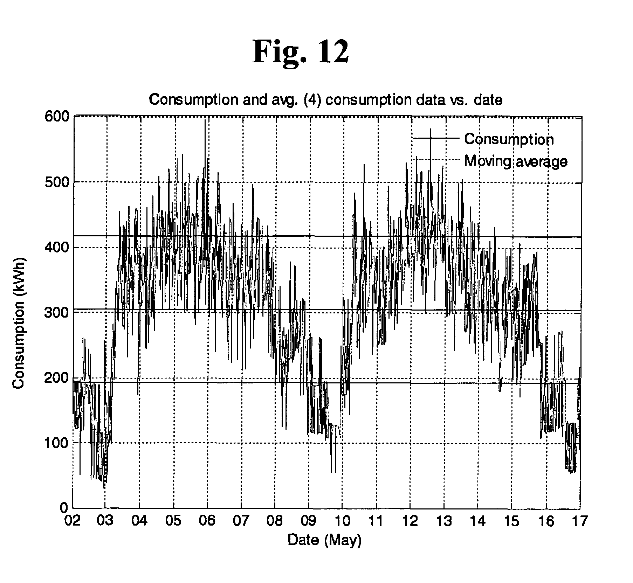

The available energy database in the experimental plant starts from 2 to 17 of May of 2010, i.e., two weeks of data time stamped of quarter hour for training and checking. The data from 2 May to 9 May (first week) were used as training data and the rest data (second week) as checking data to validate the algorithms. In Fig. 12 it is showed the quarter hour load profile of the selected workshop (OS1). The randomness of the loads can be checked. The figure shows the real quarter hour energy consumption data (red) and the filtered data (green).

On the other hand, the ANFIS self-tuning chromosome obtained by the MOGA was X1= 14, X2=3, X3=4 and X4=2. This means the selected inputs are week day, time (in minutes) and work shift production; three membership functions by input; the type of membership function is Gaussian bell function; the output function is lineal.

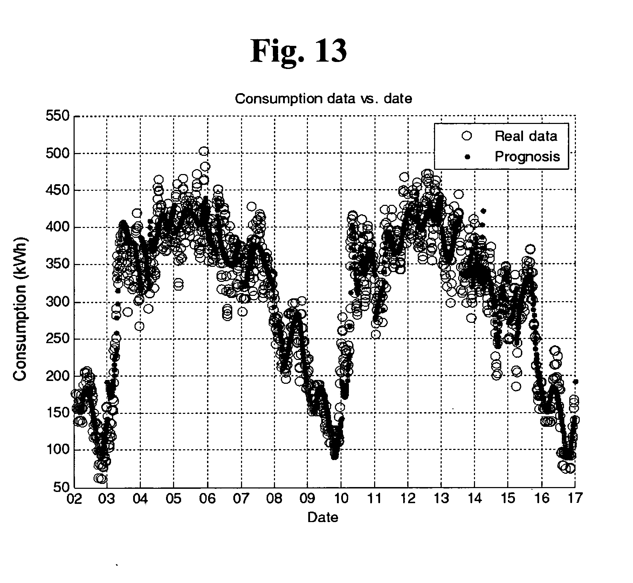

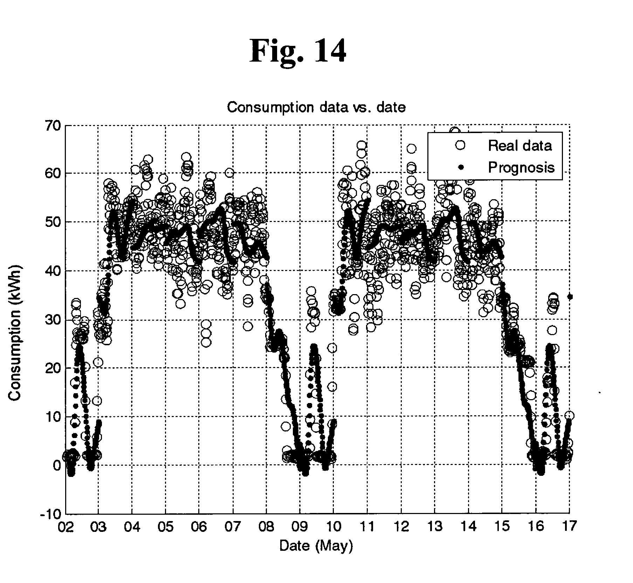

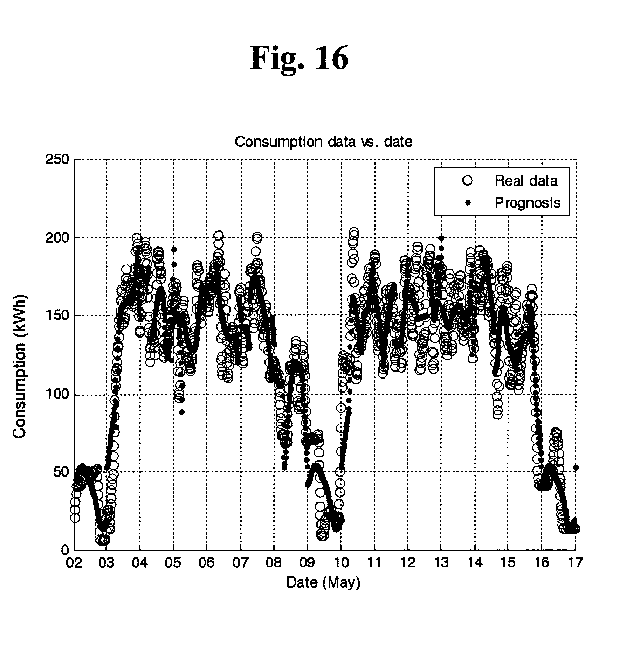

In figures 13 to 16 can be seen the obtained results for the four models. Circles and dots mark the real data and prognosis data, respectively.

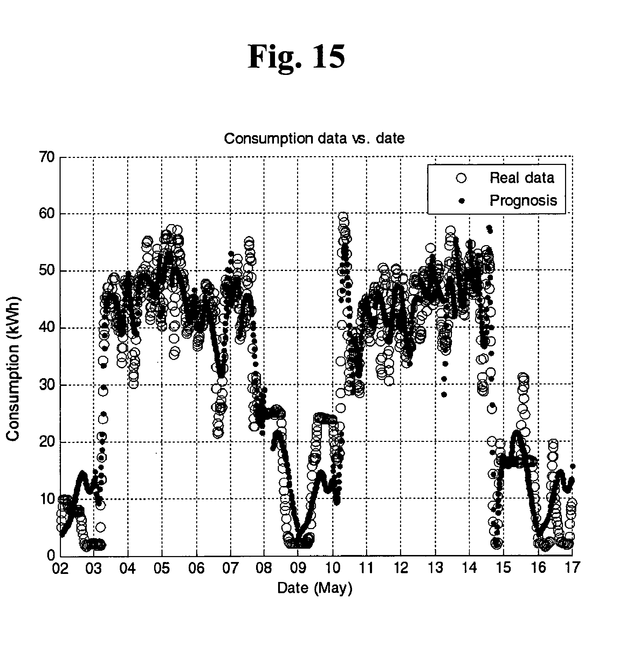

It can be seen that for the four models the forecasted load profiles fit quite well the real load profiles in both the training and checking week. In Table 2 it is shown a summary of the obtained results and in addition, the results of other sections of the factory have been added. This section used as reference, has less randomness loads and bigger consumption, so the system modelling was able to get better load profile prognosis (Fig. 15).

Table 2. Results summary of load profile modelling.

| Site | Min (kWh) | Max (kWh) | Mean (kWh) | Std. Desv. (kWh) | RMSE | RMSE/ Max |
|------|-----------|-----------|------------|-------------------|------|-----------|
| PM1 | 0.8 | 68.3 | 35.3 | 18.5 | 6.1 | 9.0% |
| PM2 | 1.3 | 60.8 | 33.0 | 16.7 | 6.3 | 10.4% |

(continued)

| Site | Min (kWh) | Max (kWh) | Mean (kWh) | Std. Desv. (kWh) | RMSE | RMSE/ Max |
|------|-----------|-----------|------------|------------------|------|-----------|
| PM3 | 8.8 | 212.3 | 122.9 | 51.9 | 21.0 | 9.9% |
| OS1 | 30.4 | 472.1 | 308.6 | 94.5 | 26.6 | 5.6 |
| OS2 | 120.8 | 2220.0 | 1397.3 | 618.6 | 90.9 | 4.1% |

The relative RMSE parameter in the last column of Table 2 shows how the performance of the system modelling is improved when it is used with a load profile with less high variation (compare the Fig. 15 with the others Figures). Moreover, it could be noted that for higher consumption sites, as OS 1 and OS2, the obtained model is better (compare the overall sites, OS1 and OS2, with the others sub-sites). This is true if higher levels are analysed, as the overall plant consumption, the substation distribution or the line of electrical energy transmission. Thus, the proposed system modelling could be use not only for indoor installations, but also in power energy distribution forecasting.

Each figure shows the high variation of the quarter hour load profile, which is really complex. In spite of this, the system modelling was able to get a quite well forecasted load profile of the next day for every site. This contrast with other works where it was got great RMSE results but only applied for forecasting of the next one hour with hourly resolution.

It must be taken into account that for a full day (24 hours) forecasting with hour or quarter hour time resolution, it can not be used the immediately delayed load data. If immediately delayed load data is used, only the next hour or quarter hour data could be forecasted with relative precision. Hence, the delayed data were not having into account as energy driver.

As it was explained before, just one data analysis was carried out to build up the system modelling. Then, it was used in each site to get the load profiles forecasting of the next day. Therefore, it was not necessary to do a modelling analysis by each site and so, the multi site capability of the system was tested. This result demonstrates that the selected framework fulfil one of the main objectives of the work.

**Claims**

1.  Method for predicting electric consumptions, **characterized in that** it comprises the following steps:

    - selecting input data;
    - pre-processing the data;
    - configuring the settings of an ANFIS, from an input data selection, the number of membership functions, the type of input membership functions and/or the type of output membership functions;
    - training of the ANFIS; and
    - evaluation of the ANFIS.

2.  Method according to claim 1, wherein the ANFIS is an adaptative network based on a Takagi-Sugeno fuzzy system.

3.  Method according to claim 1, wherein the membership functions of the input data are of trapezoidal, triangular, gaussian, sigma or Z type.

4.  Method according to claim 1, wherein the input data include:

    - instant consumptions;
    - consumption times;
    - work shifts;
    - environment temperature; and/or
    - week day.

5.  Method according to claim 1, wherein the step of configuring the settings of an ANFIS is done by multi-objective genetic algorithms (MOGA).

6.  Method according to claim 1, wherein scaling and transformation processes are done in the pre-processing step.

7.  Method according to claim 1, wherein hybrid algorithms comprising a mix between least square (LS) and back-propagation (BP) algorithms are used in the ANFIS training step.

8. Method according to claim 1, wherein the ANFIS training step includes the loading of a profile prognosis, the optimization of a genetic algorithm and the evaluation of the results.

# FIG. 1

Scheduling comands:
- Own Generation
  (*micro-nano generation*)
- Process
- HVAC

Warnings and
Reports

Optimization

Building

Consumption
Models

Trends

Prognosis

Reports

Prognosis
parameters

Plant

Historics

Current
consumption

Prognosis

EMS

Diagnosis

Warnings

Communications

Data base

Model
desviations

# Fig. 2

Warnings and
Reports

Optimization

Commands

Consumption
Models

Trends

Prognosis

Reports

Prognosis
parameter

Historics

Foreseen
Consumption

Plant

Current
Consumption

WinCC

Diagnosis

Warnings

Communications

Database

Model
Desviations

12

# Fig. 3

# Fig. 4

# Fig. 5

# Fig. 6

# Fig. 7

```
                                    ┌──────────────────┐
                                    │ Generation initial│
                                    │    population    │
                                    └──────────────────┘
                                             │
                                             ▼
┌──────────────┐              ┌──────────────────┐
│  Mutuation   │─────────────▶│ Evaluate fitness │
└──────────────┘              │    function      │
        ▲                     └──────────────────┘
        │                              │
┌──────────────┐                       ▼
│  Crossover   │                  ◇─────────────◇
└──────────────┘                 ╱  Are optimization ╲
        ▲                       ◇   criteria met?     ◇
        │                        ╲                   ╱
┌──────────────┐      NO          ◇─────────────◇
│  Selection   │◀─────────────────────┘      │
└──────────────┘                             │ YES
                                             ▼
                                    ┌──────────────────┐
                                    │ Best individuals │
                                    └──────────────────┘
```

# Fig. 8

# Fig. 9

| X1 | X2 | X3 | X4 |
|---|---|---|---|
| Input_code | Number_mf | Type_mf_in | Type_mf_o |

# Fig. 10

Energy DB
(quarter hour
consumptions)

Reading
energy
database

Reading
energy
driver
database

Energy drivers DB
- Production
- Temperature

Format data
training & checking

System modelling

Reference models

Models DB

Graphic
review

IEMS applications
- Optimization
- Diagnosis
- User app.
- Reports, etc.

# Fig. 11

$[X,Y]_{mx2}$

Load Profile
Prognosis

GA
Optimization

Results
Evaluation
(Visualize)

# Fig. 12

Consumption and avg. (4) consumption data vs. date

# Fig. 13

Consumption data vs. date

# Fig. 14

Consumption data vs. date

# Fig. 15

**Consumption data vs. date**

# Fig. 16

Consumption data vs. date

# Fig. 17

Consumption data vs. date

# Fig. 18

trimf

trapmf

gaussmf

gbellmf

sigmf

zmf

# Fig. 19

Europäisches
Patentamt

European
Patent Office

Office européen
des brevets

## EUROPEAN SEARCH REPORT

Application Number

EP 11 38 2260

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | K. LI, H. SU: "Forecasting building energy consumption with hybrid genetic algorithm-hierarchical adaptive network-based fuzzy inference system", ENERGY AND BUILDINGS, vol. 42, no. 11, 30 June 2010 (2010-06-30), pages 2070-2076, XP027236136, DOI: 10.1016/j.enbuild.2010.06.016 * the whole document * | 1-8 | INV. G06N3/04 G06N3/08 |
| X | M. COCOCCIONI, P. GUASQUI, B. LAZZERINI, F. MARCELLONI: "Identification of Takagi-Sugeno fuzzy systems based on multi-objective genetic algorithms", LECTURE NOTES IN COMPUTER SCIENCE, vol. 3849, 15 February 2006 (2006-02-15), pages 172-177, XP019028215, DOI: 10.1007/11676935_21 * the whole document * | 1-8 | |
| X | C. EMMANOUILIDIS, A. HUNTER, J. MACINTYRE, C. COX: "Selecting features in neurofuzzy modelling by multiobjective genetic algorithms", PROCEEDINGS OF THE 9TH INTERNATIONAL CONFERENCE ON ARTIFICIAL NEURAL NETWORKS (ICANN'99), vol. 2, 7 September 1999 (1999-09-07), pages 749-754, XP006502164, DOI: 10.1049/CP:19991201 * the whole document * -/-- | 1-8 | TECHNICAL FIELDS SEARCHED (IPC) G06N |

The present search report has been drawn up for all claims

| Place of search | Date of completion of the search | Examiner |
|---|---|---|
| The Hague | 24 November 2011 | Douarche, Nicolas |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**Europäisches Patentamt**
**European Patent Office**
**Office européen des brevets**

# EUROPEAN SEARCH REPORT

Application Number

EP 11 38 2260

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | E. G. CARRANO, R. H. C. TAKAHASHI, W. M. CAMINHAS, O. M. NETO: "A genetic algorithm for multiobjective training of ANFIS fuzzy networks", PROCEEDINGS OF THE 2008 IEEE CONGRESS ON EVOLUTIONARY COMPUTATION (CEC'08), 1 June 2008 (2008-06-01), pages 3259-3265, XP031325580, DOI: 10.1109/CEC.2008.4631239 * the whole document * | | |
| T | Matlab: "Fuzzy Logic Toolbox User's Guide (version 2)", , 22 April 2001 (2001-04-22), XP055012922, Retrieved from the Internet: URL:http://www.phys.ufl.edu/docs/matlab/pdf_doc/fuzzy/fuzzy_tb.pdf [retrieved on 2011-11-23] * the whole document * | | |

TECHNICAL FIELDS SEARCHED (IPC)

The present search report has been drawn up for all claims

| Place of search | Date of completion of the search | Examiner |
|---|---|---|
| The Hague | 24 November 2011 | Douarche, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document